# EUROPÄISCHE PATENTSCHRIFT

(11) **EP 1 523 616 B1**
(45) Veröffentlichungstag und Bekanntmachung des Hinweises auf die Patenterteilung: **06.09.2006**
(21) Anmeldenummer: 03765063.7
(22) Anmeldetag: 19.07.2003
(51) Int. Cl.: F02D 17/02, F02D 13/02, F01L 13/00, F16F 15/12

(54) **VERFAHREN ZUR VERBESSERUNG DES DREHMOMENTVERLAUFS AN EINER MEHRZYLINDER-VIERTAKT-KOLBENBRENNKRAFTMASCHINE**
METHOD FOR IMPROVING THE TORQUE BAND IN A MULTICYLINDER FOUR-CYCLE PISTON ENGINE
PROCEDE D'AMELIORATION DE LA TRANSMISSION DE COUPLE D'UNE MACHINE A COMBUSTION INTERNE MULTICYLINDRE ALTERNATIVE A QUATRE TEMPS

(30) Priorität: 23.07.2002 DE 10233284
(43) Veröffentlichungstag der Anmeldung: 20.04.2005
(73) Patentinhaber: FEV Motorentechnik GmbH, 52078 Aachen (DE)
(72) Erfinder: RÜTTEN, Oliver, 50859 Köln (DE)
(74) Vertreter: Maxton Langmaack & Partner
(86) Internationale Anmeldenummer: PCT/EP2003/007915
(87) Internationale Veröffentlichungsnummer: WO 2004/009983

(56) Entgegenhaltungen:
- US-A- 4 556 026
- US-A- 4 608 952
- US-A- 5 368 000
- US-A- 5 562 086
- US-B1- 6 332 445

## Beschreibung

Zur Verbesserung des Kraftstoffverbrauchs besteht bei einer Kolbenbrennkraftmaschine im Teillastbetrieb die Möglichkeit der Abschaltung von Zylindern. Bei dieser Betriebsweise arbeiten die befeuerten Zylinder an einem höheren Lastpunkt, während die nichtbefeuerten Zylinder mitgeschleppt werden. Je nach dem eingesetzten Brennverfahren und der Lastansteuerung ergibt sich durch den mit der Last steigenden Innenwirkungsgrad ein meßbarer Verbrauchsvorteil.

Die sogenannte Zylinderabschaltung ist schon bei Kolbenbrennkraftmaschinen mit höherer Zylinderzahl, beispielsweise mit 12 Zylindern, ausgeführt worden, wie zum Beispiel aus US 5,562,086 entnehmbar ist. Die sich durch die Zylinderabschaltung verändernde Drehmomentverlaufsform ist bei den höheren Zylinderzahlen oft noch akzeptabel. Während beispielsweise bei Dreizylindermaschinen durch das Übergewicht der Massenkräfte gegenüber den Gaskräften bei hoher Motordrehzahl ebenfalls noch akzeptable Drehmomentverlaufsformen erreicht werden, überwiegen jedoch im niedrigen Drehzahlbereich die Einflüsse der Gaskräfte gegenüber den Massenkräften, so daß im niedrigen Drehzahlbereich sich nicht mehr akzeptable Drehmomentverlaufsformen einstellen.

Da grundsätzlich eine Zylinderabschaltung bei allen Motordrehzahlen und bei niedriger Last eine erhebliche Verbrauchseinsparung bedeuten kann, liegt der Erfindung die Aufgabe zugrunde, ein Verfahren zur Verbesserung des Drehmomentverlaufs zu schaffen, der auch zumindest für Vierzylinder-Viertakt-Kolbenbrennkraftmaschinen, aber auch für höhere Zylinderzahlen einen verbesserten Drehmomentverlauf ergibt.

Diese Aufgabe wird gelöst durch ein Verfahren zur Verbesserung des Drehmomentverlaufs an einer Mehrzylinder-Viertakt-Kolbenbrennkraftmaschine, die wenigstens zwei Zylinderpaare mit variabel ansteuerbaren Gaswechselventilen aufweist, wobei jeweils ein Zylinderpaar aus zwei Zylindern besteht, die durch einen Zündabstand von 360° Kurbelwinkel einander zugeordnet sind, und wobei über eine Motorsteuerung für einen Teillastbetrieb durch Abschalten der Kraftstoffzufuhr und Einwirkung auf die Gaswechselventile die Zylinder eines Zylinderpaares nicht befeuert werden, das dadurch gekennzeichnet ist, daß für den Teillastbetrieb die Zylinder des nichtbefeuerten Zylinderpaares zur Einstellung einer vorgebbaren, den Drehmomentverlauf beeinflussenden Kompressionshöhe durch entsprechendes Ansteuern der Gaswechselventile eine vorgegebene Ladungsmenge aufnehmen, und daß für die Dauer des Teillastbetriebs die Gaswechselventile dieser Zylinder geschlossen gehalten werden und nur zur Beeinflussung der Ladungsmenge jeweils im Bereich des Kolbendurchlaufs durch den Bereich des unteren Totpunktes das zugehörige Gaseinlaßventil bzw. Gasauslaßventils kurzzeitig geöffnet wird. Die Wirkung des erfindungsgemäßen Verfahrens besteht darin, daß die von den nichtbefeuerten Zylindern jeweils aufgenommene Ladungsmenge bei geschlossen gehaltenen Gaswechselventilen wie eine Speicherfeder wirkt, die bei einer Kolbenbewegung vom unteren Totpunkt zum oberen Totpunkt zusammengedrückt wird und bei der Kolbenbewegung vom oberen Totpunkt zum unteren Totpunkt sich wieder entspannt und damit Arbeitsleistung an den Kolben abgibt.

Beispielsweise bei einer Vierzylinder-Viertaktmaschine ergibt sich aufgrund des gewählten Zündabstandes der Zylinder der einzelnen Zylinderpaare zueinander von 360° Kurbelwinkel der Vorteil, daß dem Kompressionshub jeweils eines befeuerten Zylinders des "arbeitenden" Zylinderpaares beide Zylinder des nichtbefeuerten, d.h. des abgeschalteten Zylinderpaares zugeordnet sind, bei dem die Wirkung der "Speicherfeder" auf den sich vom oberen zum unteren Totpunkt bewegenden Kolben wirksam wird und damit die Ladungskompression in dem befeuerten Zylinder durch Einleitung eines entsprechenden positiven Drehmomentanteils unterstützt.

Bei einem Teillastbetrieb über einen längeren Zeitraum hinweg ist es zweckmäßig vorgesehen, daß je nach Betriebsweise, wie nachstehend noch näher erläutert, für die nichtbefeuerten Zylinder beim Durchgang des Kolbens durch den unteren Totpunkt jeweils die zugehörigen Gaseinlaßventile oder Gasauslaßventile kurzzeitig geöffnet werden, um die aufgenommene Ladungsmenge zu beeinflussen, beispielsweise um Blow-By-Verluste wieder auszugleichen, so daß mit einer vorgegebenen optimalen Ladungsmenge der vorbeschriebene unterstützende Effekt durch Kompression und Expansion bei geschlossenen Gaswechselventilen an den nichtbefeuerten Zylindern aufrecht erhalten werden kann.

Insbesondere bei Kolbenbrennkraftmaschinen mit vollvariabel steuerbaren Gaswechselventilen, beispielsweise mit Gaswechselventilen, die über elektromagnetische Aktuatoren betätigbar und über die Motorsteuerung ansteuerbar sind, ist in vorteilhafter Ausgestaltung des erfindungsgemäßen Verfahrens vorgesehen, daß die Vorgabe der Ladungsmenge in Abhängigkeit von der Last und/oder der Drehzahl und/oder dem Drehmomentverlauf durch entsprechende Ansteuerung der Gaswechselventile beim Kolbendurchgang im Bereich des unteren Totpunkts angepaßt wird. Damit ist die Möglichkeit gegeben, den Drehmomentverlauf jeweils für unterschiedliche Teillastbereiche bzw. unterschiedliche Drehzahlbereiche zu optimieren. Die hier zu berücksichtigenden Teillastbereiche und/oder Drehzahlbereiche können beispielsweise in Form von Kennfeldern in der Motorsteuerung abgelegt sein. Zweckmäßig ist es, wenn der aktuelle Drehmomentverlauf erfaßt wird, beispielsweise über einen der Kurbelwelle zugeordneten Sensor, der dann als Istwert mit einem vorgegebenen Sollwert, der auch als Kennfeld abgelegt sein kann, berücksichtigt wird. Hierbei kann es zweckmäßig sein, für den Sollwert Toleranzfelder vorzusehen, um nicht laufend Korrekturen vornehmen zu müssen.

Die jeweils für die nichtbefeuerten Zylinder vorgebbare Ladungsmenge kann entweder über Abgas gebildet, oder aber über Frischluft gebildet werden.

Verwendet man Abgas als Ladungsmenge, dann sind bei geschlossenen Gaseinlaßventilen jeweils die Gasauslaßventile der nichtbefeuerten Zylinder in dem Verfahren anzusteuern.

Verwendet man Frischluft als vorgebbare Ladungsmenge, dann sind bei geschlossenen Gasauslaßventilen die Gaseinlaßventile der nichtbefeuerten Zylinder entsprechend anzusteuern.

Je nachdem ob die vorgegebene Ladungsmenge durch Abgas oder durch Frischluft gebildet wird, sind die Gaswechselventile beim Übergang von Teillast auf Vollast mit Zuschaltung der nichtbefeuerten Ventile entsprechende Verfahrensabläufe für einen schnell reagierenden Übergang vorzusehen. Diese sind in den Unteransprüchen angegeben und nachstehend näher beschrieben.

Die Erfindung wird anhand von schematischen Zeichnungen näher erläutert. Es zeigen:
- Fig. 1: den Verlauf eines Drehmomentes in Abhängigkeit von Grad Kurbelwinkel für eine Vierzylinder-Maschine im Vollastbetrieb und Betrieb mit Zylinderabschaltung;
- Fig. 2: einen Drehmomentverlauf in Abhängigkeit von Grad Kurbelwinkel für eine Vierzylinder-Maschine im Zweizylinderbetrieb ohne Zylinderabschaltung und mit Zylinderabschaltung nach dem erfindungsgemäßen Verfahren;
- Fig. 3: für eine Vierzylindermaschine ein Diagramm für das Aus- und Einschalten von zwei Zylindern bei Gaskompression;
- Fig. 4: ein Diagramm entsprechend Fig. 3 für Luftkompression;
- Fig. 5: eine Anordnung für einen zusätzlichen mechanischen Drehmomentausgleich;
- Fig. 6: Verlauf eines Ausgleichsmoments in Abhängigkeit von Grad Kurbelwinkel.

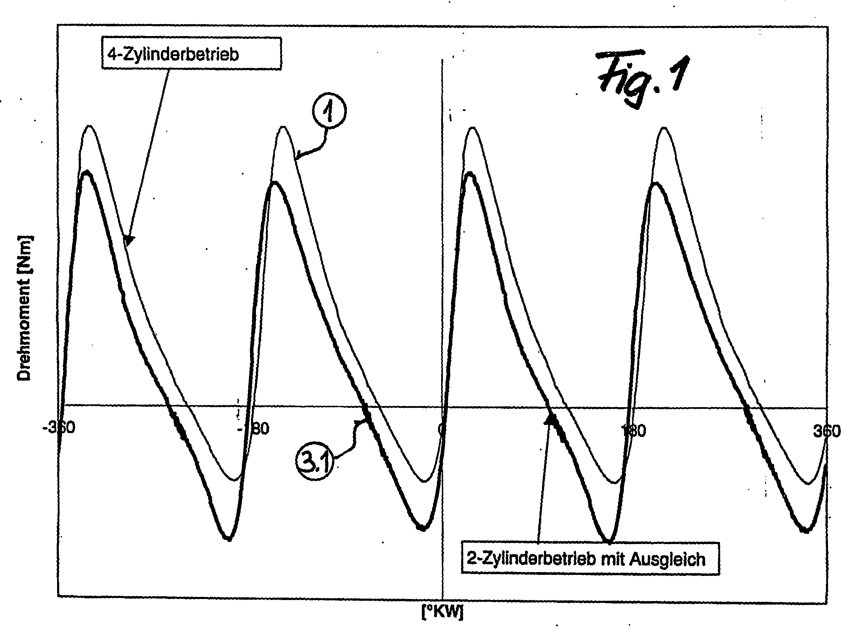

Für eine Vierzylinder-Viertakt-Kolbenbrennkraftmaschine mit zwei Zylinderpaaren, die jeweils einen Zündabstand von 360° aufweisen, beispielsweise in der Zündreihenfolge 1-3-4-2 oder 1-2-4-3, ist mit der Kurve 1 in Fig. 1 der Drehmomentverlauf bei Vollbetrieb dargestellt, d.h. einem Betrieb, bei dem alle vier Zylinder befeuert werden.

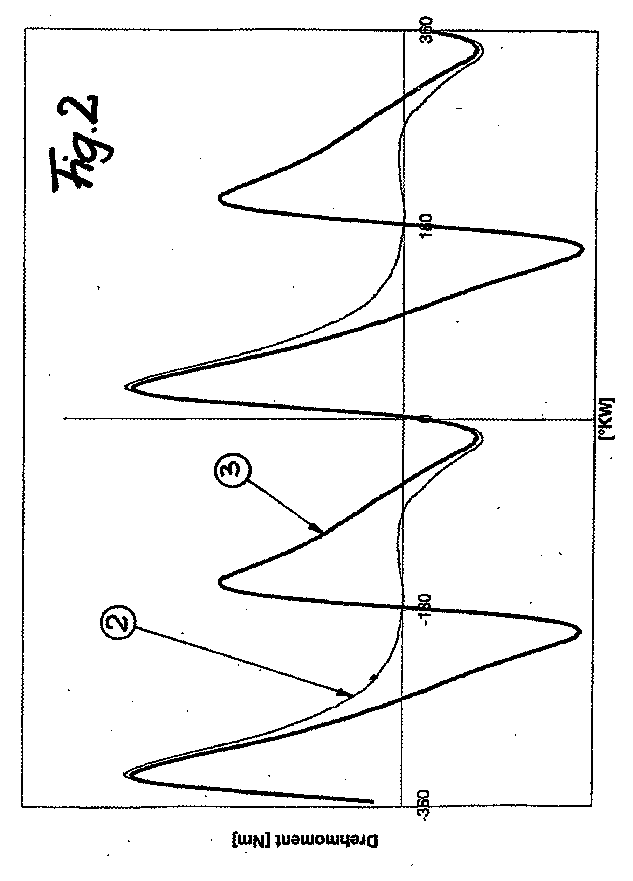

In Fig. 2 ist mit der Kurve 2 der Drehmomentverlauf für die Vierzylinder-Maschine entsprechend Fig. 1 dargestellt, der sich ergibt, wenn ein Zylinderpaar, d.h. zwei Zylinder mit einem Zündabstand von 360 Grad Kurbelwinkel in der Weise abgeschaltet werden, daß Kraftstoffzufuhr und Zündung abgeschaltet werden, die Betätigung der Gaswechselventile jedoch weiterhin im normalen Arbeitstakt erfolgt. Wie die Kurve erkennen läßt, ergibt sich ein sehr ungleichmäßiger Drehmomentverlauf und damit ein unruhiger Lauf der Kolbenbrennkraftmaschine.

Ist nun eine Kolbenbrennkraftmaschine mit variabel, insbesondere vollvariabel betätigbaren Gaswechselventilen, beispielsweise Gaswechselventilen mit elektromagnetischen Aktuatoren, ausgerüstet, dann läßt sich mit dem erfindungsgemäßen Verfahren bei einer Abschaltung eines Zylinderpaares auch bei einer Vierzylinder-Kolbenbrennkraftmaschine der Drehmomentverlauf deutlich verbessern, wie dies aus der Kurve 3 in Fig. 2 ersichtlich ist.

Bei der erfindungsgemäßen Zylinderabschaltung werden beispielsweise bei der Verwendung des Abgases für die Bildung einer vorgebbaren Ladungsmenge die Einlaßventile geschlossen gehalten und mit der Abschaltung bei der jeweils ersten Abwärtsbewegung der Kolben dieses Zylinderpaares im Saughub Abgas angesaugt. Über die Öffnungsdauer kann die Ladungsmenge bestimmt werden. Sobald die vorgegebene Ladungsmenge erreicht ist, werden auch die Gasauslaßventile geschlossen und während der gesamten Dauer der Abschaltphase geschlossen gehalten, so daß die aufgenommene Ladungsmenge in den beiden nichtbefeuerten Zylindern des abgeschalteten Zylinderpaares jeweils in der Aufwärtsbewegung des Kolbens komprimiert wird, wodurch ein negatives Drehmoment auf die Kurbelwelle aufgebracht wird, wenn der entsprechende Zylinder des befeuerten Zylinderpaares den Expansionshub durchläuft. Bei Durchgang durch den oberen Totpunkt kann jeweils die aufgenommene Ladungsmenge expandieren, so daß ein positives Drehmoment auf die Kurbelwelle einwirkt, wenn der entsprechende Zylinder des befeuerten Zylinderpaares den Kompressionshub durchläuft. Durch den vorgegebenen Zündabstand von 360° der einander zugeordneten Zylinderpaare ergibt sich bei der entsprechenden Zündreihenfolge der mit Kurve 3 in Fig. 2 dargestellte deutlich gleichmäßigere Drehmomentverlauf für die Gesamtmaschine.

Daraus ist zu erkennen, daß es mit dem erfindungsgemäßen Verfahren möglich ist, für den Teillastbetrieb einen relativ gleichmäßigen Drehmomentverlauf auch bei einer Vierzylinder-Kolbenbrennkraftmaschine zu erzielen, wenn ein Zylinderpaar abgeschaltet und das befeuerte Zylinderpaar praktisch unter Vollastbedingungen mit optimalen Brennverläufen betrieben wird. Gleichwohl wird von der Maschine insgesamt nur eine Teillast abgegeben.

Anstatt für das abgeschaltete Zylinderpaar die Ladungsmenge durch Abgas vorzugeben, kann in gleicher Weise auch Frischluft vorgegeben werden. Hierfür ergibt sich lediglich ein anderes Ansteuerschema für die Betätigung der Gaswechselventile.

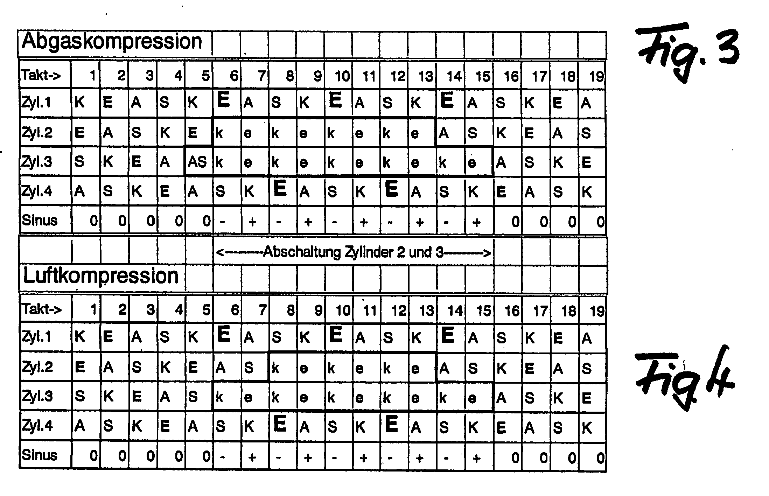

In Fig. 3 ist das Schaltschema für den "Abgasbetrieb" bei einer VierzylinderViertakt-Kolbenbrennkraftmaschine mit einem Zündabstand von 360° der einander zugeordneten Zylinderpaare bei einer Zündfolge 1-3-4-2 dargestellt. Der Abschaltzeitraum isr durch eine Umrahmung gekennzeichnet.

In dem Diagramm bedeuten:
K Kompressionstakt,
E Expansionstakt,
A Ausschiebetakt,
S Saugtakt.

Ferner bedeuten:
AS Abgassaugtakt,
k Abgas-(Luft-)kompression und
e Abgas-(Luft-)expansion.

Soll für einen Teillastbetrieb während der Arbeitstakte 6 bis 15 das durch die Zylinder 2 und 3 gebildete Zylinderpaar abgeschaltet werden, dann wird im Takt 5 im Anschluß an den Ausschiebetakt das Gasauslaßventil offengehalten, so daß Abgas angesaugt wird. Für die anschließenden Takte 6 bis 15 bleiben sowohl das Gaseinlaßventil als auch das Gasauslaßventil geschlossen.

Während des Abgasansaugtaktes für den Zylinder 3 erfolgt für den abzuschaltenden Zylinder 2 der Expansionstakt, so daß bereits im Takt 6 das Abgasventil geschlossen gehalten wird und damit die aus dem Expansionstakt stammende Ladungsmenge im Zylinder 2 gehalten bleibt.

Für die Zuschaltung dieses Zylinderpaares für einen Vollastbetrieb ab Takt 16 werden bereits ab Takt 14 die Gaswechselventile wieder im Normalbetrieb angesteuert, während für den Zylinder 3 noch einmal die Kompression und die Expansion bei geschlossenen Gaswechselventilen erfolgt und erst mit Arbeitstakt 16 die Ansteuerung der Gaswechselventile für den Zylinder 3 im normalen Arbeitstakt erfolgt.

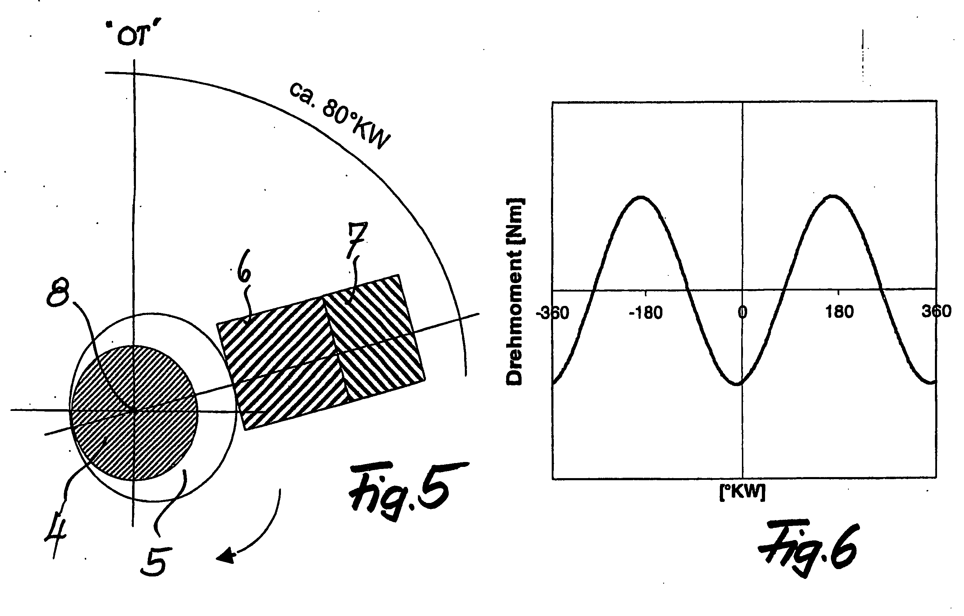

In Fig. 4 ist für den gleichen, ebenfalls durch eine Umrahmung gekennzeichneten Abschaltzeitraum von Arbeitstakt 5 bis Arbeitstakt 15 das Schaltschema für die Luftkompression dargestellt. Hierbei wird für den Zylinder 3 bereits zu Beginn des Saugtaktes im Arbeitstakt 5 die Kraftstoffzufuhr abgesperrt, so daß (praktisch) nur Luft angesaugt wird und die aufgenommene Ladungsmenge ab dem Arbeitstakt 6 bei geschlossenen Gaswechselventilen komprimiert werden und expandieren kann, so daß für den Übergang zum Vollastbetrieb für den Arbeitstakt 16 das Gasauslaßventil im "Normalbetrieb" angesteuert werden kann.

Für den Zylinder 2 erfolgt die Abschaltung der Ansteuerung der Gaswechselventile entsprechend verzögert. Die Kraftstoffzufuhr wird zu Beginn des Arbeitstaktes 7 abgestellt, so daß im Anschluß an den Saugtakt mit dem Arbeitstakt 8 die Gaswechselventile geschlossen bleiben. Für den Übergang werden dann die Gaswechselventile mit dem Arbeitstakt 14 bereits wieder im Normalbetrieb angesteuert.

Um nun den Drehmomentverlauf bei Zylinderabschaltung noch etwas zu glätten, ist es zweckmäßig, auf die Kurbelwelle zusätzlich ein periodisch wechselndes Drehmoment aufzubringen. Dies kann beispielsweise in der Form geschehen, daß, wie in Fig. 5 dargestellt, auf einen an der Kurbelwelle 4 angebrachten Nocken 5 über einen Stößel 6 und eine Speicherfeder 7 eine entsprechende Kraft aufgenommen und wieder eingeleitet wird. Der Scheitelpunkt der Exzentrizität liegt um etwa-80° Kurbelwinkel nach dem oberen Totpunkt der befeuerten Zylinder, so daß während des Expansionstaktes des jeweils befeuerten Zylinders ein Teil der Energie Über die Speicherfeder 7 aufgenommen und beim Übergang zum Ausstoßtakt wieder abgegeben wird.

Die Steuerkurve des Nockens 5 ist so ausgelegt, daß der in Fig. 6 dargestellte mit der Anordnung gemäß Fig. 5 zusätzlich aufzubringende Drehmomentverlauf erzielt wird. Dieser zusätzlich aufzubringende Drehmomentverlauf hat während der Kompression und Expansion der befeuerten Zylinder ein negatives Moment und infolge des Zündabstandes während der Kompression und Expansion der abgeschalteten Zylinder ein positives Moment. In der Überlagerung ergibt sich dann eine zusätzliche Glättung des Drehmomentverlaufs, wie er mit der Kurve 3.1 in Fig. 1 dargestellt ist.

Zur Drehmomentbeeinflussung bei verschiedenen Lasten der befeuerten Zylinder ist die Federkraft der Speicherfeder 7 einstellbar zu gestalten. Der Winkel der maximalen Einfederung und somit des größten Nockenhubes ist so auf der Kurbelwelle zu wählen, daß zu dieser Kurbelwellenstellung die befeuerten Zylinder Kompression und Expansion im wesentlichen beendet haben. Dies ist bei einem Winkel von 80° Kurbelwinkel nach OT in etwa gegeben.

Eine weitere Möglichkeit, zusätzlich ein periodisch wechselndes Drehmoment aufzubringen, besteht im periodischen Drehmomentbetrieb einer mit der Kolbenbrennkraftmaschine verbundenen Elektromaschine und einem entsprechenden Energiespeicher, welcher das Drehmoment kurzzeitig aufnimmt bzw. kurzzeitig eine Last abnimmt und anschließend wieder abgibt. Dies ist beispielsweise durch Batterien oder auch Kondensatoren gegeben, die mit einer Elektromaschine in Verbindung stehen, die sowohl im Generator- als auch im Motorbetrieb betrieben werden kann.

Insbesondere bei vollvariabel steuerbaren Gaswechselventilen läßt sich nun über eine Änderung des zeitpunktes des Schließens der Gasauslaß- bzw. der Gaseinlaßventile die jeweils verbleibende Ladungsmenge auch variieren.

Ein Schließen der "ansaugenden" Ventile zu Beginn der Zylinderabschaltung zu einem in der Nähe des unteren Totpunktes liegenden Zeitpunkt führt dabei zu einem hohen Ladungseinsatz der im Mittel ohne Momentenabgabe komprimierenden und expandierenden Zylinder. Durch ein Schließen des oder der letzten noch geöffneten "ansaugenden" Ventile zu einem Zeitpunkt vor oder nach dem unteren Totpunkt verändert die Ladungsmenge und damit die zu erzielende Kompressionshöhe in den abgeschalteten, d.h. nichtbefeuerten Zylindern. Auch ein kurzzeitiges Öffnen und Schließen von einem oder mehreren der "ansaugenden" Ventile zu einem Zeitpunkt in der Nähe des unteren Totpunktes bewirkt eine Luft- oder Abgasansaugung und kompensiert so den durch Blow-By-Verluste aus dem Zylinder entwichenen Ladungsteil. Das Nachladen der Zylinderfüllung zum Ausgleich von Blow-By-Verlusten oder auch eine Änderung der Ladungsmenge kann alle 360° Kurbelwinkel erfolgen oder sich auch nur auf jedes n-te Arbeitsspiel beschränken. Die Höhe des erforderlichen Ladungseinsatzes steigt mit der Last der befeuerten Zylinder.

Die vorstehend beschriebenen Maßnahmen zur Verbesserung des Drehmomentverlaufs bei Viertakt-Kolbenbrennkraftmaschinen, die jeweils Zylinderpaare mit einem Zündabstand von 360° aufweisen, lassen sich entsprechend auch für Kolbenbrennkraftmaschinen mit 8, 12 oder 16 Zylindern einsetzen. Entsprechend werden bei einer Achtzylinder-Maschine zwei Zylinderpaare, bei einer Zwölfzylinder-Maschine drei Zylinderpaare und bei einer Sechzehnzylinder-Maschine vier Zylinderpaare abgeschaltet, die jeweils zum selben Kurbelwinkel ihren oberen Totpunkt aufweisen. Die abzuschaltenden Zylinder sind Zylinder mit gleichem Zündabstand, der doppelt so lang ist wie im Vollbetrieb.

Die Motorsteuerung kann nun so ausgestaltet sein, daß bei Überschreiten einer vorgegebenen Dauer für den Teillastbetrieb die Zylinderabschaltung von einem Zylinderpaar auf das andere Zylinderpaar wechselt, um so eine Mindesttemperaturhöhe für die jeweils abgeschalteten Zylinderpaare einzuhalten, damit beim Übergang von Teillastbetrieb zum Vollastbetrieb das jeweils abgeschaltete zylinderpaar schnellstmöglich seine Betriebstemperatur wieder erreicht.

## Patentansprüche

1. Verfahren zur Verbesserung des Drehmomentverlaufs an einer Mehrzylinder-Viertakt-Kolbenbrennkraftmaschine, die wenigstens zwei Zylinderpaare mit variabel ansteuerbaren Gaswechselventilen aufweist, wobei jeweils ein Zylinderpaar aus zwei Zylindern besteht, die durch einen Zündabstand von 360°KW einander zugeordnet sind, und wobei über eine Motorsteuerung für einen Teillastbetrieb durch Abschalten der Kraftstoffzufuhr und Einwirken auf die Gaswechselventile die Zylinder eines Zylinderpaares nicht befeuert werden, **dadurch gekennzeichnet, daß** für den Teillastbetrieb die Zylinder des nichtbefeuerten Zylinderpaares zur Einstellung einer vorgebbaren, den Drehmomentverlauf beeinflussenden Kompressionshöhe durch entsprechendes Ansteuern der Gaswechselventile eine vorgegebene Ladungsmenge aufnehmen, und daß für die Dauer des Teillastbetriebs die Gaswechselventile dieser Zylinder geschlossen gehalten werden und nur zur Beeinflussung der Ladungsmenge jeweils im Bereich des unteren Kolbendurchlaufs durch den unteren Totpunktbereich das zugehörige Gaseinlaßventil bzw. Gasauslaßventil kurzzeitig geöffnet wird.

2. Verfahren nach Anspruch 1, **dadurch gekennzeichnet, daß** die Vorgabe der Ladungsmenge in Abhängigkeit von der Last und/oder der Drehzahl und/oder dem Drehmomentverlauf durch entsprechende Ansteuerung der Gaswechselventile beim Kolbendurchgang im Bereich des unteren Totpunkts angepaßt wird.

3. Verfahren nach Anspruch 1 oder 2, **dadurch gekennzeichnet, daß** zur Formung des Drehmomentverlaufs auf die Kurbelwelle zusätzlich ein auf die befeuerten Zylinder abgestimmtes zusätzliches Drehmoment aufgebracht wird.

4. Verfahren nach einem der Ansprüche 1 bis 3, **dadurch gekennzeichnet, daß** bei Abgas als vorgebbarer Ladungsmenge bei dem abzuschaltenden Zylinderpaar beim Übergang vom befeuerten zum nichtbefeuerten Betrieb beim Saughub der Zylinder die Gaseinlaßventile geschlossen gehalten und jeweils die Gasauslaßventile geöffnet werden, so daß Abgas als Ladungsmenge angesaugt wird, und daß für den Übergang vom nichtbefeuerten zum befeuerten Betrieb die Gaswechselventile der nichtbefeuerten Zylinder im regulären Arbeitstakt mit einem Ladungswechsel entsprechend Vollastbetrieb angesteuert und die Kraftstoffzufuhr entsprechend der regulären Zündfolge zugeschaltet wird.

5. Verfahren nach einem der Ansprüche 1 bis 3, daß bei Luft als vorgebbarer Ladungsmenge für die Zylinder des abzuschaltenden Zylinderpaares beim Übergang vom befeuerten zum nichtbefeuerten Betrieb die Gasauslaßventile geschlossen gehalten werden und die Gaseinlaßventile beim Saughub geöffnet werden, so daß als Ladungsmenge Luft angesaugt wird, und daß beim Übergang vom nichtbefeuerten zum befeuerten Betrieb die Gaswechselventile der nichtbefeuerten Zylinder im regulären Arbeitstakt mit einem Ladungswechsel entsprechend Vollastbetrieb angesteuert werden und die Kraftstoffzufuhr entsprechend der regulären Zündfolge zugeschaltet wird.

## Claims

1. A method for improving the torque curve of a multi-cylinder, four-cycle piston internal combustion engine comprising at least two cylinder pairs with variably triggered gas exchange valves, wherein in each case a cylinder pair consists of two cylinders associated with each other by a firing interval of 360° crank angle, and wherein for partial load operation the cylinders of one cylinder pair are prevented from being fired by means of an engine control unit by cutting off the fuel supply and acting upon the gas exchange valves, **characterised in that** for the partial load operation the cylinders of the non-fired cylinder pair, in order to adjust a predetermined compression level that influences the torque curve, take in a predetermined charge quantity by appropriate triggering of the gas exchange valves, and that for the duration of the partial load operation the gas exchange valves of these cylinders are kept closed and the associated gas intake valve or gas discharge valve is opened briefly solely to influence the charge quantity in each case in the region of the lower piston passage through the bottom dead centre region.

2. A method according to claim 1, **characterised in that** the preset of the charge quantity is adapted dependent on the load and/or the speed and/or the torque curve by correspondingly triggering the gas exchange valves during the piston passage in the region of the bottom dead centre.

3. A method according to claim 1 or 2, **characterised in that** additionally an additional torque which is adapted to the fired cylinders is exerted on the crank shaft for generating the torque curve.

4. A method according to one of claims 1 to 3, **characterised in that** when using exhaust gas as the predetermined charge quantity for the cylinder pair which is to be cut off when transitioning from fired to non-fired operation during the intake stroke of the cylinders the gas intake valves are kept closed and in each case the gas discharge valves are opened, so that exhaust gas is drawn in as the charge quantity, and that for transitioning from non-fired to fired operation the gas exchange valves of the non-fired cylinders are triggered during the regular operating cycle with a charge change corresponding to full load operation and the fuel is supplied in accordance with the regular firing sequence.

5. A method according to one of claims 1 to 3, [**characterised in**] that when using air as the predetermined charge quantity for the cylinders of the cylinder pair which is to be cut off when transitioning from fired to non-fired operation the gas discharge valves are kept closed and the gas intake valves are opened during the intake stroke, so that air is drawn in as the charge quantity, and that for transitioning from non-fired to fired operation the gas exchange valves of the non-fired cylinders are triggered during the regular operating cycle with a charge change corresponding to full load operation and the fuel is supplied in accordance with the regular firing sequence.

## Revendications

1. Procédé pour améliorer la courbe de couple d'un moteur à combustion interne multicylindres à quatre temps, présentant au moins deux paires de cylindres munies de soupapes d'échange des gaz à commande variable, chacune des paires de cylindres se composant de deux cylindres associés l'un à l'autre par un décalage d'allumage de 360° du vilebrequin, et dans lequel, via une commande de charge partielle du moteur par la coupure de l'arrivée du carburant et une action sur les soupapes d'échange des gaz, les cylindres d'une paire de cylindres ne sont pas enflammés, **caractérisé en ce que** pour le mode de charge partielle, les cylindres de la paire de cylindres non enflammée, pour la mise en place d'une compression prédéterminée agissant sur la courbe de couple, reçoivent par une commande correspondante des soupapes d'échange des gaz une quantité de charge prédéterminée, et **en ce que** pendant toute la durée du mode de charge partielle, les soupapes d'échange des gaz de ces cylindres sont maintenues fermées et que la soupape d'admission, respectivement la soupape d'échappement, des gaz associée n'est que brièvement ouverte dans la zone de course inférieure du piston passant par la zone de point mort bas pour influer sur la quantité de charge.

2. Procédé selon la revendication 1, **caractérisé en ce que** la prédétermination de la quantité de charge est adaptée en fonction de la charge et/ou du régime et/ou de la courbe de couple par une commande correspondante des soupapes d'échange des gaz lors de la course du piston dans la zone du point mort bas.

3. Procédé selon la revendication 1 ou 2, **caractérisé en ce que** pour former la courbe de couple, on applique en outre sur le vilebrequin un couple supplémentaire adapté aux cylindres enflammés.

4. Procédé selon l'une des revendications 1 à 3, **caractérisé en ce que** dans le cas où l'on utilise les gaz d'échappement en tant que quantité de charge pouvant être prédéterminée pour la paire de cylindres à désactiver, lors de la transition entre le mode enflammé et le mode non enflammé, pendant la course d'admission des cylindres, les soupapes d'admission des gaz sont maintenues fermées et les soupapes d'échappement des gaz sont respectivement ouvertes, de telle sorte que les gaz d'échappement sont admis en tant que quantité de charge, et **en ce que** lors de la transition entre le mode non enflammé et le mode enflammé, les soupapes d'échange des gaz des cylindres non enflammés sont commandées dans le temps moteur normal avec une alternance de charge correspondant au mode pleine charge et que l'arrivée de carburant est actionnée conformément à la séquence d'allumage normale.

5. Procédé selon l'une des revendications 1 à 3, **caractérisé en ce que** dans le cas où l'on utilise l'air en tant que quantité de charge pouvant être prédéterminée pour les cylindres de la paire de cylindres à désactiver, lors de la transition entre le mode enflammé et le mode non enflammé, les soupapes d'échappement des gaz sont maintenues fermées et les soupapes d'admission des gaz sont ouvertes lors de la course d'admission, de telle sorte que de l'air est admis en tant que quantité de charge, et **en ce que** lors de la transition entre le mode non enflammé et le mode enflammé, les soupapes d'échange des gaz des cylindres non enflammés sont commandées dans le temps moteur normal avec une alternance de charge correspondant au mode pleine charge et que l'arrivée de carburant est actionnée conformément à la séquence d'allumage normale.
